# EUROPEAN PATENT SPECIFICATION

(11) **EP 4 387 321 B1**
(45) Date of publication and mention of the grant of the patent: **22.07.2026**
(21) Application number: 22860429.4
(22) Date of filing: 22.08.2022
(51) Int. Cl.: H04L 1/1822, H04L 1/1867, H04W 28/02, H04W 28/04, H04W 84/06

(54) **ELECTRONIC DEVICE AND METHOD FOR WIRELESS COMMUNICATION, AND COMPUTER-READABLE STORAGE MEDIUM**
ELEKTRONISCHE VORRICHTUNG UND VERFAHREN ZUR DRAHTLOSEN KOMMUNIKATION UND COMPUTERLESBARES SPEICHERMEDIUM
DISPOSITIF ÉLECTRONIQUE ET PROCÉDÉ DE COMMUNICATION SANS FIL, ET SUPPORT DE STOCKAGE LISIBLE PAR ORDINATEUR

(30) Priority: 27.08.2021 CN 202110997075
(43) Date of publication of application: 19.06.2024
(73) Proprietor: Sony Group Corporation, Tokyo 108-0075 (JP)
(72) Inventor: LIU, Min, Beijing 100027 (CN)
(74) Representative: D Young & Co LLP
(86) International application number: PCT/CN2022/113872
(87) International publication number: WO 2023/025083

(56) References cited:
- WO-A1-2020/227171
- CN-A- 102 647 757
- CN-A- 107 567 693
- CN-A- 110 121 906
- CN-A- 112 753 254
- GB-A- 2 580 913
- US-A1- 2013 250 925
- US-A1- 2021 266 978
- ZTE: "Discussion on timing relationship for NR-NTN", 3GPP DRAFT; R1-2105189, vol. RAN WG1, 12 May 2021 (2021-05-12), pages 1 - 8, XP052011267
- ERICSSON: "Transmit timing adjustment delay", 3GPP DRAFT; R4-1707119 STTIPT TRANSMIT TIMING ADJUSTMENT CR, vol. RAN WG4, 20 August 2017 (2017-08-20), Berlin, Germany, pages 1 - 2, XP051320396

## Description

### FIELD OF THE INVENTION

This application claims the priority of Chinese Patent Application No. 202110997075.1, entitled "ELECTRONIC DEVICE AND METHOD FOR WIRELESS COMMUNICATION, AND COMPUTER-READABLE STORAGE MEDIUM", filed with the Chinese Patent Office on August 27, 2021.

### TECHNICAL FIELD

The present disclosure relates to the technical field of wireless communications, particularly to correctly transmitting an updated timing advance to user equipment in a case where a timing advance is updated in a process during which a base station retransmits the timing advance to the user equipment, and more particularly, to an electronic apparatus and method for wireless communications, and a computer-readable storage medium.

### BACKGROUND ART

In wireless communication environment, a Timing Advance (TA) is generally used for User Equipment (UE) uplink transmission, which refers to pre-estimating radio frequency transmission latency caused by a distance and sending a data packet in advance by a corresponding time, so as to make an uplink transmission packet of a UE arrive at a base station at a desired time.

A TA error will cause generation of Inter-Symbol Interference (ISI) at a base station. When the ISI is large to a certain extent, a decoding error will be caused, resulting in decoding failure, reducing transmission efficiency of a UE, and affecting user experience.

There are many scenarios where a TA changes rapidly. For example, due to movement of a base station such as a satellite, a relative position between the base station and a UE changes constantly, thereby resulting in very frequent changes in a TA. Also for example, in a scenario such as a high-speed train, an airplane and the like where a UE moves rapidly, a relative position between a base station and the UE changes constantly due to the movement of the UE, thereby resulting in very frequent changes in a TA.

In the existing technology, a base station performs TA update for each user equipment at a Timing Advance Group (TAG) level through a Medium Access Control Element (MAC CE), the MAC CE is included in a Physical Downlink Shared Channel (PDSCH) for transmission, the PDSCH needs Hybrid Automatic Repeat Request (HARQ) Acknowledgment (ACK) feedback, and uplink scheduling is carried in Downlink Control Information (DCI) for sending, so even if uplink scheduling is performed immediately in a next time slot upon completion of sending of a TA command, a problem of TA invalidation will be caused when a Round-Trip Delay (RTD) is relatively large.

In addition, due to influences of noise and interference and the like in a channel, it is possible that a Transport Block (TB) containing a TA command cannot be correctly received by user equipment, thus needing to retransmit a TA. However, the TA may be updated in a scenario where the TA changes rapidly. If an original TA is still transmitted during retransmission, a TA error on a UE end will be caused.

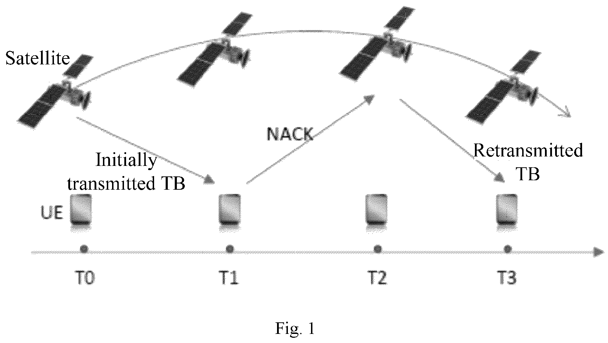

FIG. 1 is a schematic diagram showing transmission timing advances in the prior art.

As shown in FIG. 1, at a time T0, a base station (such as a satellite) initially transmits a TB carrying a TA (a TA suitable for T0) relative to the T0 to a UE using a MAC CE. At a time T1, a UE receives no DCI or fails to decode correctly, and thus the UE sends a NACK for the TB carrying the TA relative to the T0. At a time T2, the base station retransmits a TB to the UE, with the TB still carrying the TA relative to the T0. At a time T3, the UE correctly receives the TB. Then, the UE extracts the TA from the received TB, and interprets the extracted TA as being applicable to the T3. However, the extracted TA is actually applicable only to the T1, and the extracted TA is not applicable to the T3 because the TA changes at the T3 due to movement of the satellite. The UE has applied the TA suitable for the T0 to perform uplink transmission at the time T3, and thus the UE has applied an erroneous TA.

Cited references include WO 2020/227171 A1.

### SUMMARY OF THE INVENTION

The invention is defined by the claims.

### BRIEF DESCRIPTION OF THE DRAWINGS

In order to further set forth the above and other advantages and features of the present invention, specific embodiments of the present invention will be further described in detail below in conjunction with the accompanying drawings. The accompanying drawings together with the following detailed description are included in this specification and form a part of this specification. Elements with identical functions and structures are denoted by identical reference numerals. It should be understood that, these figures only describe typical examples of the present invention, and should not be regarded as limitations to the scope of the present invention. In the accompanying drawings:
FIG. 1 is a schematic diagram showing transmission timing advances in the existing technology;
FIG. 2 shows a schematic diagram of an electronic apparatus for wireless communications according to an embodiment of the present disclosure;
FIG. 3 shows a schematic diagram of an electronic apparatus for wireless communications according to another embodiment of the present disclosure;
FIG. 4 shows a flowchart of a method for wireless communications according to an embodiment of the present disclosure;
FIG. 5 shows a flowchart of a method for wireless communications according to another embodiment of the present disclosure;
FIG. 6 is a block diagram showing a first example of a schematic configuration of an eNB or gNB to which the technology of the present disclosure can be applied;
FIG. 7 is a block diagram showing a second example of a schematic configuration of an eNB or gNB to which the technology of the present disclosure can be applied;
FIG. 8 is a block diagram showing an example of a schematic configuration of a smart phone to which the technology of the present disclosure can be applied;
FIG. 9 is a block diagram showing an example of a schematic configuration of automobile navigation equipment to which the technology of the present disclosure can be applied;
FIG. 10 is a block diagram of an exemplary structure of a universal personal computer in which the methods and/or apparatuses and/or systems according to the embodiments of the present invention can be implemented.

### DETAILED DESCRIPTION OF THE EMBODIMENTS

Hereinafter, exemplary embodiments of the present disclosure will be described in conjunction with the accompanying drawings. For the sake of clarity and conciseness, the description does not describe all features of actual embodiments. However, it should be understood that in developing any such actual embodiment, many decisions specific to the embodiments must be made, so as to achieve specific objects of a developer; for example, those limitation conditions related to systems and services are satisfied, and these limitation conditions possibly will vary as embodiments are different. In addition, it should also be appreciated that, although developing work may be very complicated and time-consuming, such developing work is only routine tasks for those skilled in the art benefiting from the present disclosure.

It should also be noted herein that, to avoid the present invention from being obscured due to unnecessary details, only those apparatus structures and/or processing steps closely related to the solution according to the present invention are shown in the accompanying drawings, while omitting other details not closely related to the present invention.

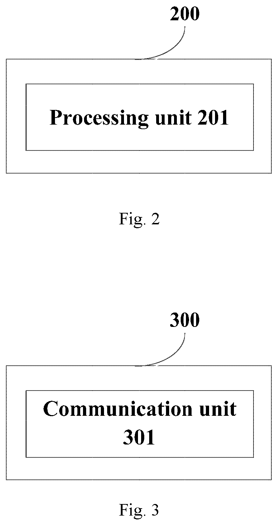

FIG. 2 shows a schematic diagram of an electronic apparatus for wireless communications according to an embodiment of the present disclosure.

As shown in FIG. 2, an electronic apparatus 200 comprises: a processing unit 201 which may, in a process during which first information about a first timing advance of user equipment within a service range of a device related to the electronic apparatus 200 is to be retransmitted to the user equipment using a hybrid automatic repeat request mechanism, transmit second information about a second timing advance to the user equipment in a case where the first timing advance is updated, wherein the second timing advance is an updated first timing advance.

Wherein, the processing unit 201 may be implemented by one or more processing circuitries which may be implemented as, for example, a chip.

The electronic apparatus 200 may serve as a network side apparatus in a wireless communication system, and specifically may be arranged on a base station side or communicably connected to a base station, for example. In a case where the electronic apparatus 200 is arranged on a base station side or communicably connected to a base station, the device related to the electronic apparatus 200 may be a base station. It should also be noted herein that, the electronic apparatus 200 may be implemented at chip level or at device level. For example, the electronic apparatus 200 may work as a base station itself, and may also include external devices such as a memory, a transceiver (not shown) and the like. The memory may be used to store programs and related data information that the base station needs to execute in order to implement various functions. The transceiver may include one or more communication interfaces to support communication with different devices (e.g., a base station, other user equipment, etc.), and the implementation form of the transceiver is not specifically limited here.

The wireless communication system according to the present disclosure may be a 5G NR (New Radio) communication system. Further, the wireless communication system according to the present disclosure may include a Non-terrestrial network (NTN). Optionally, the wireless communication system according to the present disclosure may also include a Terrestrial network (TN). In addition, those skilled in the art can understand that the wireless communication system according to the present disclosure may also be a 4G or 3G communication system.

The electronic apparatus 200 transmits information about a timing advance to user equipment using an HARQ mechanism. For example, the electronic apparatus 200 transmits first information about a first timing advance of the user equipment to the user equipment at the time of initial transmission. Due to influences of noise and interference and the like in a channel, it is possible that the electronic apparatus 200 cannot correctly receive the first information, and thus the electronic apparatus 200 needs to retransmit the first information. If the first timing advance is updated in a process during which the first information is to be retransmitted, the electronic apparatus 200 transmits second information about a second timing advance (i.e., an updated first timing advance) to correctly transmit the updated timing advance to the user equipment.

As an example but not a limitation, in a scenario where a TA changes rapidly, the first timing advance may be updated in a process during which the first information is to be retransmitted. The scenario where a TA changes rapidly is, for example: due to movement of a base station such as a satellite, a relative position between the base station and a UE changes constantly, thereby resulting in very frequent changes in a TA; or, in a scenario such as a high-speed train, an airplane and the like where a UE moves rapidly, a relative position between a base station and the UE changes constantly due to the movement of the UE, thereby resulting in very frequent changes in a TA.

For example, the electronic apparatus 200 may transmit a TB including information about a timing advance to the user equipment through an MAC CE.

In the existing technology, as described in conjunction with FIG. 1, in a scenario where a TA changes rapidly, even if the TA has been updated, a base station still transmits an original TA during retransmission, thereby causing a TA error at a UE end.

However, the electronic apparatus 200 according to the embodiment of the present disclosure may, in a process during which a timing advance about the user equipment is retransmitted, correctly transmit an updated timing advance to the user equipment in a case where the timing advance has been updated, so as to enable the UE to perform uplink transmission with the updated timing advance.

As an example, the device related to the electronic apparatus 200 may be a satellite. The device related to the electronic apparatus 200 may also be an apparatus in the Internet of Vehicles, etc., which will not be repeatedly described here.

As an example, the processing unit 201 may be configured to call, in a case where information to be transmitted in a first HARQ process for retransmission is the first information, a second HARQ process different from the first HARQ process to transmit the second information

An HARQ process used for initially transmitting the first information and an HARQ process to be used for retransmitting the first information are the same HARQ process, which will be marked as a first HARQ process hereinafter.

In a case where information to be transmitted in the first HARQ process for retransmission is the first information, a timing advance included in a retransmitted TB is the same as a timing advance included in an initially transmitted TB, and cannot reflect the updated timing advance.

As can be known from the above, in the case where the information to be transmitted in the first HARQ process for retransmission is the first information, the electronic apparatus 200 overwrites the timing advance included in the first HARQ process for retransmission by calling a second HARQ process different from the first HARQ process for retransmission, so as to correctly transmit the updated timing advance to the user equipment.

The first information is a value of the first timing advance, and the second information is a value of the second timing advance. In the existing technology, a timing advance is transmitted in the manner of making a difference by taking a timing advance of the previous transmission as a reference. In a case where the base station cannot predict whether retransmission can be correctly received by the user equipment, a reference value of the difference cannot be determined. However, in the embodiment of the present disclosure, after access of the user equipment to the device related to the electronic apparatus 200, the timing advance is always transmitted in the form of an absolute value instead of a difference. Therefore, even in a case where the electronic apparatus 200 cannot predict whether the information transmitted in the first HARQ process for retransmission can be correctly received by the user equipment, the user equipment may also directly use the second timing advance received through the second HARQ process.

As an example, the first information is a difference value between the first timing advance and an initial timing advance at the time of initial access of the user equipment to the device related to the electronic apparatus 200, and the second information is a difference value between the second timing advance and the initial timing advance. At the time of initial access of the user equipment to the device related to the electronic apparatus 200, the device sends msg.2 or msg.B including the initial timing advance to the user equipment, msg.2 or msg.B having higher reliability, wherein msg.2 is a second step in a four-step handshaking process of a random access process, and msg.B is a second step in a two-step handshaking process of a random access process. In the embodiment according to the present disclosure, a timing advance is transmitted in the manner of making a difference based on an initial timing advance with higher reliability, but not in the manner of making a difference based on a timing advance of the previous transmission. Therefore, even in a case where the electronic apparatus 200 cannot predict whether the information transmitted in the first HARQ process for retransmission can be correctly received by the user equipment, the user equipment can still use the second information received through the second HARQ process to correctly obtain the second timing advance.

As an example, the second information is a difference value between the second timing advance and a timing advance correctly received and used by the user equipment, and the processing unit 201 may be configured to inform, through DCI signaling, the user equipment of: ignoring information about a timing advance received in the first HARQ process, and obtaining the second timing advance based on the received second information and the timing advance correctly received and used by the user equipment. For example, the timing advance correctly received and used by the user equipment is a timing advance correctly received and used by the user equipment which is determined by the electronic apparatus 200. In the embodiment according to the present disclosure, even in a case where the electronic apparatus 200 cannot predict whether the information transmitted in the first HARQ process for retransmission can be correctly received by the user equipment, the electronic apparatus 200 notifies the user equipment of obtaining the second timing advance based on the received second information and the timing advance correctly received and used by the user equipment, by informing the user equipment of ignoring information about a timing advance received in the first HARQ process.

As an example, the second information is a difference value between the second timing advance and a timing advance correctly received and used by the user equipment, and the processing unit 201 may be configured to send DCI scrambled by Scrambled Transmission-Radio Network Temporary Identifier (INT-RNTI) to the user equipment, so as to inform the user equipment that a time-frequency resource where an MAC CE carrying the first information and transmitted in the first HARQ process lies is invalid, to inform the user equipment of obtaining the second timing advance based on the second information and the timing advance correctly received and used by the user equipment. For example, the timing advance correctly received and used by the user equipment is a timing advance correctly received and used by the user equipment which is determined by the electronic apparatus 200. In the embodiment according to the present disclosure, even in a case where the electronic apparatus 200 cannot predict whether retransmission can be correctly received by the user equipment, the electronic apparatus 200 notifies the user equipment of obtaining the second timing advance based on the received second information and the timing advance correctly received and used by the user equipment, by informing the user equipment that a time-frequency resource where an MAC CE carrying the first information and transmitted in the first HARQ process lies is invalid.

As an example, the processing unit 201 may be configured to transmit the second information and not transmit the first information in a first HARQ process for retransmission in a case where information to be transmitted in the first HARQ process for retransmission is the first information.

If information to be transmitted in the first HARQ process for retransmission is still the first information, a timing advance included in a retransmitted TB is the same as a timing advance included in an initially transmitted TB, and thus cannot reflect the updated timing advance. Therefore, in this case, the electronic apparatus 200 transmits the second information about the updated timing advance and does not transmit the first information in the first HARQ process for retransmission.

As can be known from the above, the electronic apparatus 200 correctly transmits the updated timing advance to the user equipment by transmitting information about the updated timing advance in the first HARQ process for retransmission.

The processing unit 201 is configured to send DCI scrambled by INT-RNTI to the user equipment, so as to inform the user equipment that a time-frequency resource where an MAC CE carrying the first information and transmitted in a first HARQ process for initial transmission lies is invalid, to inform the user equipment of not soft combing the first information and the second information after receiving the second information

The electronic apparatus 200 uses an INT-RNTI-scrambled DCI format to tell the user equipment, for example, which Physical Resource Blocks (PRBs) and Orthogonal Frequency Division Multiplexing (OFDM) symbols are useless, so as to invalidate a time-frequency resource where an MAC CE in a TB transmitted in the first HARQ for initial transmission lies. In this way, the user equipment reads second information about an updated timing advance when receiving retransmission of this TB, and since the first information transmitted by the electronic apparatus 200 in the first HARQ process for initial transmission is different from the second information transmitted in the first HARQ process for retransmission, the user equipment will not soft combine the first information received in the initial transmission with the second information received in the retransmission, so as to ensure that the user equipment uses the updated timing advance about the second information as its timing advance for uplink transmission. Further, the user equipment may soft combine the time-frequency resource received in initial transmission other than the timing advance with a corresponding time-frequency resource received in retransmission, so as to improve the reliability of reception.

As an example, the processing unit 201 may be configured to transmit the second information based on a Code Block Group (CBG) and to, in DCI for indicating the retransmission, set Code Bock Group Flushing-out Information (CBGFI) to a value indicating that none of CBGs transmitted in a first HARQ process for retransmission is soft combined with a corresponding CBG transmitted in a first HARQ process for initial transmission.

In the existing standard, the number of bits of CBGFI is 1. If CBGFI is 0, it is indicated that a retransmitted CBG is not soft combined with a previously received CBG; if CBGFI is 1, it is indicated that a retransmitted CBG may be soft combined with a previously received CBG.

In the electronic apparatus 200 according to the embodiment of the present disclosure, since the first information transmitted in the first HARQ process for initial transmission is different from the second information transmitted in the first HARQ process for retransmission, a value of CBGFI may be set to 0, so that the user equipment will not soft combine the first information and the second information, so as to ensure that the user equipment uses the updated timing advance about the second information as its timing advance for uplink transmission.

As an example, the processing unit 201 may be configured to transmit the second information based on a CBG, and to extend the number of bits of Code Bock Group Flushing-out Information, CBGFI, in DCI for indicating the retransmission to be the same as the number of bits of Code Bock Group Transmission Information, CBGTI, and to set bits in the CBGFI, which correspond to bits in the CBGTI indicating a CBG including the second information, to a value indicating that a CBG including the second information transmitted in a first HARQ process for retransmission is not soft combined with a corresponding CBG transmitted in a first HARQ process for initial transmission.

As stated above, in the existing standard, the number of bits of CBGFI is 1. However, in the electronic apparatus 200 according to the embodiment of the present disclosure, the number of bits of CBGFI may be extended, that is, the number of bits of CBGFI may be extended to be the same as the number of bits of Code Bock Group Transmission Information, CBGTI. Since the first information transmitted by the electronic apparatus 200 in the first HARQ process for initial transmission is different from the second information transmitted in the first HARQ process for retransmission, CBGFI corresponding to a CBG including the timing advance may be set to zero, so that the user equipment does not soft combine the CBG including the second information received via the first HARQ process for retransmission with the corresponding CBG received via the first HARQ process for initial transmission, so as to ensure that the user equipment uses the updated timing advance about the second information as its timing advance for uplink transmission.

As an example, the processing unit 201 may be further configured to set bits of the CBGFI, among bits corresponding to CBGs transmitted in a first HARQ process for retransmission, other than the bits corresponding to the CBG including the second information, to a value indicating that CBGs transmitted in the first HARQ process for retransmission are soft combined with corresponding CBGs transmitted in the first HARQ process for initial transmission.

The electronic apparatus 200 may set values of other CBGFI, among extended CBGFI, than the CBGFI corresponding to the timing advance to 1, that is, may soft combine the time-frequency resource in the CBG received in initial transmission other than the timing advance with the time-frequency resource in the corresponding CBG received in retransmission, so as to improve the reliability of a received time-frequency resource.

The present disclosure further provides an electronic apparatus for wireless communications according to another embodiment. FIG. 3 shows a schematic diagram of an electronic apparatus 300 for wireless communications according to another embodiment of the present disclosure. As shown in FIG. 3, the electronic apparatus 300 comprises: a communication unit 301 which may, in a process during which first information about a first timing advance of the electronic apparatus 300 is to be re-received from a network side apparatus serving the electronic apparatus 300 using an HARQ mechanism, receive second information about a second timing advance from the network side apparatus in a case where the first timing advance is updated, wherein the second timing advance is an updated first timing advance.

Wherein, the processing unit 301 may be implemented by one or more processing circuitries which may be implemented as, for example, a chip.

The electronic apparatus 300 may be arranged on a User Equipment (UE) side or communicably connected to user equipment, for example. It should also be noted herein that, the electronic apparatus 300 may be implemented at chip level or at device level. For example, the electronic apparatus 300 may work as user equipment itself, and may also include external devices such as a memory, a transceiver (not shown in the figure) and the like. The memory may be used to store programs and related data information that the user equipment needs to execute in order to implement various functions. The transceiver may include one or more communication interfaces to support communication with different devices (e.g., a base station, other user equipment, etc.), and the implementation form of the transceiver is not specifically limited here. The base station may be an eNB or a gNB, for example.

As an example, the network side apparatus may be a base station. For example, the network side apparatus may be the electronic apparatus 200 according to the embodiment of the present disclosure.

The electronic apparatus 300 receives information about a timing advance from the network side apparatus using an HARQ mechanism. For example, the electronic apparatus 300 receives, from the network side apparatus, the first information about the first timing advance transmitted via initial transmission. Due to influences of noise and interference and the like in a channel, it is possible that the electronic apparatus 300 cannot correctly receive the first information, and thus the electronic apparatus 300 needs to re-receive the first information. If the first timing advance is updated in a process during which the first information is to be re-received, the electronic apparatus 300 receives second information about a second timing advance (i.e., an updated first timing advance) to ensure the updated timing advance to be received.

The electronic apparatus 300 according to the embodiment of the present disclosure may, in a process during which a timing advance is re-received, receive an updated timing advance in a case where the timing advance has been updated, so that the electronic apparatus 300 can perform uplink transmission with the updated timing advance.

As an example, the communication unit 301 may be configured to receive, in a case where information received via a first HARQ process for retransmission is the first information, the second information via a second HARQ process different from the first HARQ process.

In the case where the information received via the first HARQ process for retransmission is the first information, the electronic apparatus 300 can receive the updated timing advance via the second HARQ process.

The first information is a value of the first timing advance, and the second information is a value of the second timing advance. Accordingly, the electronic apparatus 300 may directly use the second timing advance received via the second HARQ process as its timing advance for uplink transmission.

As an example, the first information is a difference value between the first timing advance and an initial timing advance at the time of initial access of the electronic apparatus 300 to the network side apparatus, and the second information is a difference value between the second timing advance and the initial timing advance. Since the initial timing advance has higher reliability, the electronic apparatus 300 may more reliably obtain the second timing advance based on the initial timing advance and the second information.

As an example, the second information is a difference value between the second timing advance and a timing advance correctly received and used by the electronic apparatus 300, and the communication unit 301 may be configured to be informed, through DCI signaling, of: ignoring information about a timing advance received in the first HARQ process, and obtaining the second timing advance based on the received second information and the timing advance correctly received and used by the electronic apparatus 300. Accordingly, the electronic apparatus 300 can obtain the second timing advance based on the received second information and the timing advance correctly received and used by the electronic apparatus 300.

As an example, the second information is a difference value between the second timing advance and a timing advance correctly received and used by the electronic apparatus 300, and the communication unit 301 may be configured to be informed, via DCI scrambled by INT-RNTI, that: a time-frequency resource where an MAC CE carrying the first information and transmitted by the network side apparatus in the first HARQ process lies is invalid, so that the electronic apparatus 300 obtains the second timing advance based on the second information and the timing advance correctly received and used by the electronic apparatus 300. Accordingly, the electronic apparatus 300 can obtain the second timing advance based on the received second information and the timing advance correctly received and used by the electronic apparatus 300.

As an example, the communication unit 301 may be configured to receive the second information, not the first information, via a first HARQ process for retransmission. Accordingly, the electronic apparatus 300 can obtain the updated timing advance.

The communication unit 301 is configured to be informed, via DCI scrambled by INT-RNTI, that a time-frequency resource where an MAC CE carrying the first information and transmitted by the network side apparatus in a first HARQ process for initial transmission lies is invalid, so that the electronic apparatus does not soft combine the first information and the second information after receiving the second information. Accordingly, the electronic apparatus 300 will not soft combine the first information received via initial transmission with the second information received via retransmission, so as to ensure that the electronic apparatus 300 uses the updated timing advance about the second information as its timing advance for uplink transmission. For example, the above electronic apparatus 300 may be an electronic apparatus in the Internet of Things that does not support CBG-based transmission.

As an example, the communication unit 301 may be further configured to soft combine information, among information received via a first HARQ process for retransmission, other than the second information, with corresponding information received via a first HARQ process for initial transmission. Accordingly, the electronic apparatus 300 may soft combine the time-frequency resource received via initial transmission other than the timing advance with the corresponding time-frequency resource received via retransmission, so as to improve the reliability of reception.

As an example, the communication unit 301 may be configured to receive the second information based on a CBG, and to receive Downlink Control Information, DCI, for indicating the retransmission from the network side apparatus, wherein in the DCI, Code Block Group Flushing-out Information CBGFI is set to a value indicating that none of CBGs transmitted in a first HARQ process for retransmission is soft combined with a corresponding CBG transmitted in a first HARQ procedure for initial transmission. Accordingly, the electronic apparatus 300 will not soft combine the first information and the second information, so as to ensure that the electronic apparatus 300 uses the updated timing advance about the second information as its timing advance for uplink transmission.

As an example, the communication unit 301 may be configured to receive the second information based on a CBG, and to receive Downlink Control Information, DCI, for indicating the retransmission from the network side apparatus, wherein in the DCI, the number of bits of Code Bock Group Flushing-out Information, CBGFI, in the Downlink Control Information, DCI, for indicating the retransmission is extended to be the same as the number of bits of Code Bock Group Transmission Information, CBGTI, and bits in the CBGFI, which correspond to bits in the CBGTI indicating a CBG including the second information, are set to a value indicating that a CBG including the second information transmitted in a first HARQ process for retransmission is not soft combined with a corresponding CBG transmitted in a first HARQ process for initial transmission. Accordingly, the electronic apparatus 300 does not soft combine the CBG including the second information transmitted in the first HARQ process for retransmission with the corresponding CBG transmitted in the first HARQ process for initial transmission, so as to ensure that the electronic apparatus 300 uses the updated timing advance about the second information as its timing advance for uplink transmission.

As an example, bits of the CBGFI, among bits corresponding to CBGs transmitted in a first HARQ process for retransmission, other than the bits corresponding to the CBG including the second information, are set to a value indicating that CBGs transmitted in the first HARQ process for retransmission are soft combined with corresponding CBGs transmitted in the first HARQ process for initial transmission. Accordingly, the electronic apparatus 300 may soft combine the time-frequency resource in the CBG received via initial transmission other than the timing advance with the time-frequency resource in the corresponding CBG received via retransmission, so as to improve the reliability of a received time-frequency resource.

The above electronic apparatus 300 that receives the second information based on a CBG is, for example, a smart phone, etc.

In the process of describing the electronic apparatuses for wireless communications in the above implementations, some processing or methods obviously have also been disclosed. Hereinafter, an outline of these methods will be given without repeating some of the details that have been discussed above; however, it should be noted that, although these methods are disclosed in the process of describing electronic apparatuses for wireless communications, these methods do not necessarily employ those components as described or are not necessarily executed by those components. For example, the implementations of the electronic apparatuses for wireless communications may be partially or completely realized using hardware and/or firmware, while the methods for wireless communications discussed below may be completely implemented by a computer-executable program, although these methods may also employ hardware and/or firmware of the electronic apparatuses for wireless communications.

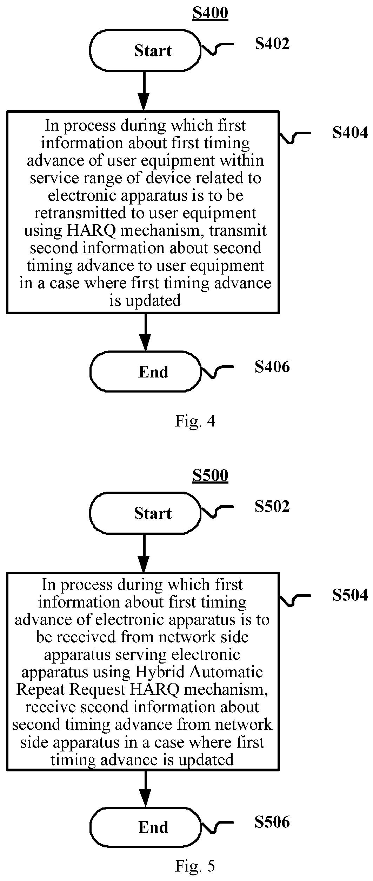

FIG. 4 shows a flowchart of a method S400 for wireless communications according to an embodiment of the present disclosure. The method S400 starts in step S402. In step S404, in a process during which first information about a first timing advance of user equipment within a service range of a device related to an electronic apparatus is to be retransmitted to the user equipment using an HARQ mechanism, second information about a second timing advance is transmitted to the user equipment in a case where the first timing advance is updated, wherein the second timing advance is an updated first timing advance. The method S400 ends in step S406.

The method may be executed by, for example, the electronic apparatus 200 as described above. Please refer to the description at the above corresponding position for specific details, which will not be repeated here.

FIG. 5 shows a flowchart of a method S500 for wireless communications according to another embodiment of the present disclosure. The method S500 starts in step S502. In step S504, in a process during which first information about a first timing advance of an electronic apparatus is to be re-received from a network side apparatus serving the electronic apparatus using a Hybrid Automatic Repeat Request HARQ mechanism, second information about a second timing advance is received from the network side apparatus in a case where the first timing advance is updated, wherein the second timing advance is an updated first timing advance. The method S500 ends in step S506.

The method may be executed by, for example, the electronic apparatus 300 as described above. Please refer to the description at the above corresponding position for specific details, which will not be repeated here.

The technology of the present disclosure can be applied to various products.

The electronic apparatus 200 may be implemented as various network side apparatuses such as a base station. The base station may be implemented as any type of evolved Node B (eNB) or gNB (5G base station). An eNB includes, for example, macro eNBs and small eNBs. A small eNB may be an eNB that covers a cell smaller than a macro cell, such as a pico eNB, a micro eNB, and a home (femto) eNB. A similar situation can also apply to gNBs. Alternatively, the base station may be implemented as any other type of base station, such as a NodeB and a base transceiver station (BTS). The base station may include: a main body (also referred to as base station equipment) configured to control wireless communications; and one or more remote radio heads (RRHs) arranged at a different place from the main body. In addition, various types of electronic apparatuses can all operate as base stations by temporarily or semi-persistently performing base station functions.

The electronic apparatus 300 may be implemented as various user equipment. The user equipment may be implemented as a mobile terminal (such as a smart phone, a tablet personal computer (PC), a notebook PC, a portable game terminal, a portable/dongle type mobile router, and a digital camera) or a vehicle-mounted terminal (such as an automobile navigation device). The user equipment may also be implemented as a terminal (also referred to as a machine type communication (MTC) terminal) that executes Machine-to-Machine (M2M) communications. In addition, the user equipment may be a wireless communication module (such as an integrated circuit module including a single chip) installed on each of the above-mentioned terminals.

### [Application Examples About Base Station]

### (First Application Example)

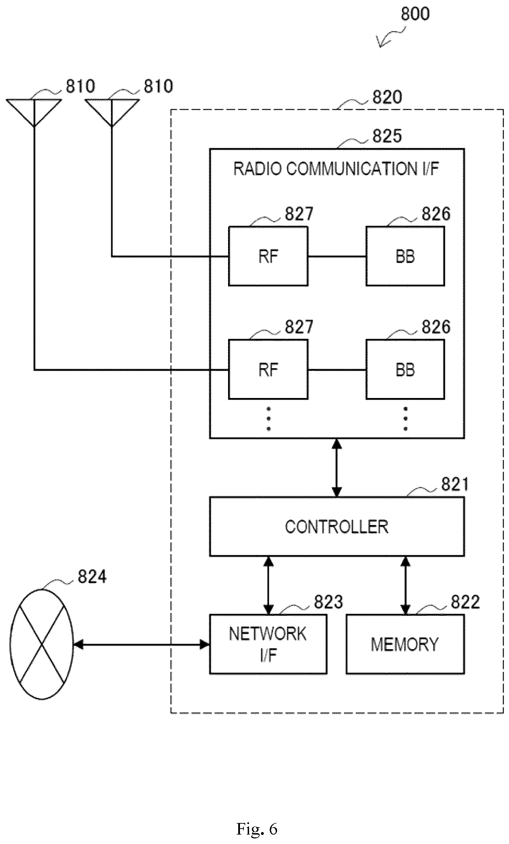

FIG. 6 is a block diagram showing a first example of a schematic configuration of an eNB or gNB to which the technology of the present disclosure can be applied. Note that, the following description takes an eNB as an example, but it may also be applied to a gNB. An eNB 800 includes one or more antennas 810 and base station equipment 820. The base station equipment 820 and each antenna 810 may be connected to each other via an RF cable.

Each of the antennas 810 includes a single or multiple antenna elements (such as multiple antenna elements included in a Multi-Input Multi-Output (MIMO) antenna), and is used for the base station equipment 820 to transmit and receive wireless signals. As shown in FIG. 6, the eNB 800 may include multiple antennas 810. For example, the multiple antennas 810 may be compatible with multiple frequency bands used by the eNB 800. Although FIG. 6 shows an example in which the eNB 800 includes multiple antennas 810, the eNB 800 may also include a single antenna 810.

The base station equipment 820 includes a controller 821, a memory 822, a network interface 823, and a radio communication interface 825.

The controller 821 may be, for example, a CPU or a DSP, and manipulate various functions of a higher layer of the base station equipment 820. For example, the controller 821 generates a data packet based on data in a signal processed by the radio communication interface 825, and transfers the generated packet via the network interface 823. The controller 821 may bundle data from multiple baseband processors to generate a bundled packet, and transfer the generated bundled packet. The controller 821 may have a logical function for performing control such as radio resource control, radio bearer control, mobility management, admission control, and scheduling. The control may be executed in conjunction with nearby eNBs or core network nodes. The memory 822 includes an RAM and an ROM, and stores programs executed by the controller 821 and various types of control data (such as a terminal list, transmission power data, and scheduling data).

The network interface 823 is a communication interface for connecting the base station equipment 820 to a core network 824. The controller 821 may communicate with the core network node or another eNB via the network interface 823. In this case, the eNB 800 and the core network node or other eNBs may be connected to each other through a logical interface (such as an S1 interface and an X2 interface). The network interface 823 may also be a wired communication interface, or a wireless communication interface for a wireless backhaul line. If the network interface 823 is a wireless communication interface, the network interface 823 may use a higher frequency band for wireless communications than the frequency band used by the radio communication interface 825.

The radio communication interface 825 supports any cellular communication scheme (such as Long Term Evolution (LTE) and LTE-Advanced), and provides wireless connection to a terminal located in a cell of the eNB 800 via an antenna 810. The radio communication interface 825 may generally include, for example, a baseband (BB) processor 826 and an RF circuit 827. The BB processor 826 may execute, for example, encoding/decoding, modulation/demodulation, and multiplexing/demultiplexing, and execute various types of signal processing of layers (e.g., L1, Medium Access Control (MAC), Radio Link Control (RLC), and Packet Data Convergence Protocol (PDCP)). Instead of the controller 821, the BB processor 826 may have a part or all of the above-mentioned logical functions. The BB processor 826 may be a memory storing a communication control program, or a module including a processor and related circuits configured to execute the program. An update program may cause the function of the BB processor 826 to be changed. The module may be a card or blade inserted into a slot of the base station equipment 820. Alternatively, the module may also be a chip mounted on a card or blade. Meanwhile, the RF circuit 827 may include, for example, a mixer, a filter, and an amplifier, and transmit and receive a wireless signal via the antenna 810.

As shown in FIG. 6, the radio communication interface 825 may include multiple BB processors 826. For example, the multiple BB processors 826 may be compatible with multiple frequency bands used by the eNB 800. As shown in FIG. 6, the radio communication interface 825 may include multiple RF circuits 827. For example, the multiple RF circuits 827 may be compatible with multiple antenna elements. Although FIG. 6 shows an example in which the radio communication interface 825 includes multiple BB processors 826 and multiple RF circuits 827, the radio communication interface 825 may also include a single BB processor 826 or a single RF circuit 827.

In the eNB 800 as shown in FIG. 6, when the electronic apparatus 200 as described with reference to FIG. 2 is implemented as a base station, the transceiver of this electronic apparatus 200 may be implemented by a radio communication interface 825. At least a part of the function may also be implemented by the controller 821. For example, the controller 821 may transmit an updated timing advance to the user equipment by executing the function of the unit 201 as described above with reference to FIG. 2.

### (Second Application Example)

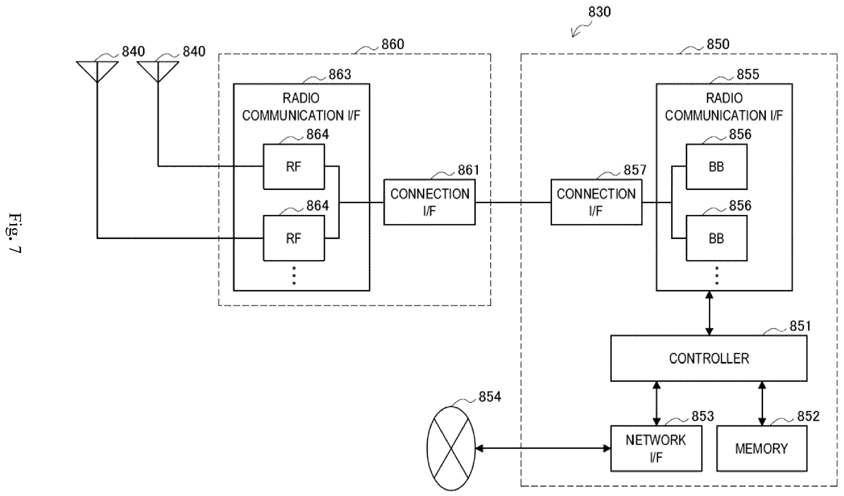

FIG. 7 is a block diagram showing a second example of a schematic configuration of an eNB or gNB to which the technology of the present disclosure can be applied. Note that similarly, the following description takes an eNB as an example, but it may also be applied to a gNB. An eNB 830 includes one or more antennas 840, base station equipment 850, and an RRH 860. The RRH 860 and each antenna 840 may be connected to each other via an RF cable. The base station equipment 850 and the RRH 860 may be connected to each other via a high-speed line such as an optical fiber cable.

Each of the antennas 840 includes a single or multiple antenna elements (such as multiple antenna elements included in a MIMO antenna) and is used for the RRH 860 to transmit and receive a wireless signal. As shown in FIG. 7, the eNB 830 may include multiple antennas 840. For example, the multiple antennas 840 may be compatible with multiple frequency bands used by the eNB 830. Although FIG. 7 shows an example in which the eNB 830 includes multiple antennas 840, the eNB 830 may also include a single antenna 840.

The base station equipment 850 includes a controller 851, a memory 852, a network interface 853, a radio communication interface 855, and a connection interface 857. The controller 851, the memory 852, and the network interface 853 are the same as the controller 821, the memory 822, and the network interface 823 as described with reference to FIG. 6.

The radio communication interface 855 supports any cellular communication scheme (such as LTE and LTE-Advanced), and provides wireless communications to a terminal located in a sector corresponding to the RRH 860 via the RRH 860 and the antenna 840. The radio communication interface 855 may generally include, for example, a BB processor 856. The BB processor 856 is the same as the BB processor 826 as described with reference to FIG. 6 except that the BB processor 856 is connected to the RF circuit 864 of the RRH 860 via the connection interface 857. As shown in FIG. 7, the radio communication interface 855 may include multiple BB processors 856. For example, the multiple BB processors 856 may be compatible with multiple frequency bands used by the eNB 830. Although FIG. 7 shows an example in which the radio communication interface 855 includes multiple BB processors 856, the radio communication interface 855 may also include a single BB processor 856.

The connection interface 857 is an interface for connecting the base station equipment 850 (radio communication interface 855) to the RRH 860. The connection interface 857 may also be a communication module for communication in the above-mentioned high-speed line that connects the RRH 860 to the base station equipment 850 (radio communication interface 855).

The RRH 860 includes a connection interface 861 and a radio communication interface 863.

The connection interface 861 is an interface for connecting the RRH 860 (radio communication interface 863) to the base station equipment 850. The connection interface 861 may also be a communication module for communication in the above-mentioned high-speed line.

The radio communication interface 863 transfers and receives wireless signals via the antenna 840. The radio communication interface 863 may generally include, for example, an RF circuit 864. The RF circuit 864 may include, for example, a mixer, a filter, and an amplifier, and transfer and receive wireless signals via the antenna 840. As shown in FIG. 7, the radio communication interface 863 may include multiple RF circuits 864. For example, the multiple RF circuits 864 may support multiple antenna elements. Although FIG. 7 shows an example in which the radio communication interface 863 includes multiple RF circuits 864, the radio communication interface 863 may also include a single RF circuit 864.

In the eNB 830 as shown in FIG. 7, when the electronic apparatus 200 as described with reference to FIG. 2 is implemented as a base station, the transceiver of this electronic apparatus 200 may be implemented by the radio communication interface 855. At least a part of the function may also be implemented by the controller 851. For example, the controller 851 may transmit an updated timing advance by executing the function of the unit 201 as described above with reference to FIG. 2.

### [Application Examples About User Equipment]

### (First Application Example)

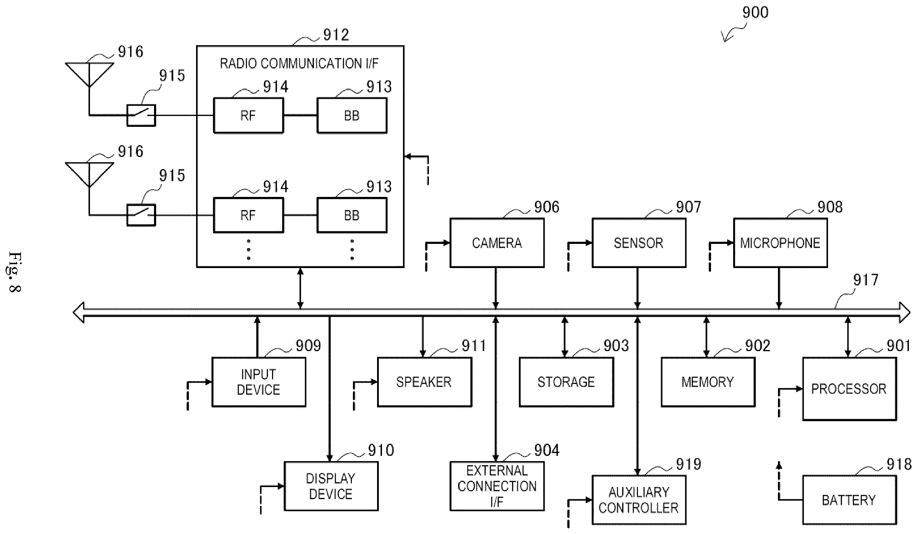

FIG. 8 is a block diagram showing an example of a schematic configuration of a smart phone 900 to which the technology of the present disclosure can be applied. The smart phone 900 includes a processor 901, a memory 902, a storage 903, an external connection interface 904, an camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls the functions of the application layer and other layers of the smart phone 900. The memory 902 includes an RAM and an ROM, and stores data and programs executed by the processor 901. The storage 903 may include a storage medium such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetic sensor, and an acceleration sensor. The microphone 908 converts sound input to the smart phone 900 into an audio signal. The input device 909 includes, for example, a touch sensor, a keypad, a keyboard, a button, or a switch configured to detect a touch on a screen of the display device 910, and receives an operation or information input from the user. The display device 910 includes a screen (such as a liquid crystal display (LCD) and an organic light emitting diode (OLED) display), and displays an output image of the smart phone 900. The speaker 911 converts the audio signal output from the smart phone 900 into sound.

The radio communication interface 912 supports any cellular communication scheme (such as LTE and LTE-Advanced), and executes wireless communications. The radio communication interface 912 may generally include, for example, a BB processor 913 and an RF circuit 914. The BB processor 913 may execute, for example, encoding/decoding, modulation/demodulation, and multiplexing/demultiplexing, and execute various types of signal processing for wireless communications. Meanwhile, the RF circuit 914 may include, for example, a mixer, a filter, and an amplifier, and transmit and receive wireless signals via the antenna 916. Note that, although the figure shows a circumstance where one RF link is connected with one antenna, this is only schematic, and a circumstance where one RF link is connected with multiple antennas through multiple phase shifters is also included. The radio communication interface 912 may be a chip module on which the BB processor 913 and the RF circuit 914 are integrated. As shown in FIG. 8, the radio communication interface 912 may include multiple BB processors 913 and multiple RF circuits 914. Although FIG. 8 shows an example in which the radio communication interface 912 includes multiple BB processors 913 and multiple RF circuits 914, the radio communication interface 912 may also include a single BB processor 913 or a single RF circuit 914.

Furthermore, in addition to the cellular communication scheme, the radio communication interface 912 may support other types of wireless communication schemes, such as a short-range wireless communication scheme, a near field communication scheme, and a wireless local area network (LAN) scheme. In this case, the radio communication interface 912 may include a BB processor 913 and an RF circuit 914 for each wireless communication scheme.

Each of the antenna switches 915 switches a connection destination of the antenna 916 among multiple circuits included in the radio communication interface 912 (e.g., circuits for different wireless communication schemes).

Each of the antennas 916 includes a single or multiple antenna elements (such as multiple antenna elements included in a MIMO antenna), and is used for the radio communication interface 912 to transmit and receive wireless signals. As shown in FIG. 8, the smart phone 900 may include multiple antennas 916. Although FIG. 8 shows an example in which the smart phone 900 includes multiple antennas 916, the smart phone 900 may also include a single antenna 916.

Furthermore, the smart phone 900 may include an antenna 916 for each wireless communication scheme. In this case, the antenna switch 915 may be omitted from the configuration of the smart phone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to each block of the smart phone 900 as shown in FIG. 8 via a feeder line, which is partially shown as a dashed line in the figure. The auxiliary controller 919 manipulates the least necessary function of the smart phone 900 in a sleep mode, for example.

In the smart phone 900 as shown in FIG. 8, in a case where the electronic apparatus 300 as described with reference to FIG. 3 is, for example, implemented to serve as a smart phone on a user equipment side, the transceiver of the electronic apparatus 300 may be implemented by the radio communication interface 912. At least a part of the function may also be implemented by the processor 901 or the auxiliary controller 919. For example, the processor 901 or the auxiliary controller 919 may receive an updated timing advance by executing the function of the unit as described above with reference to FIG. 3.

### (Second Application Example)

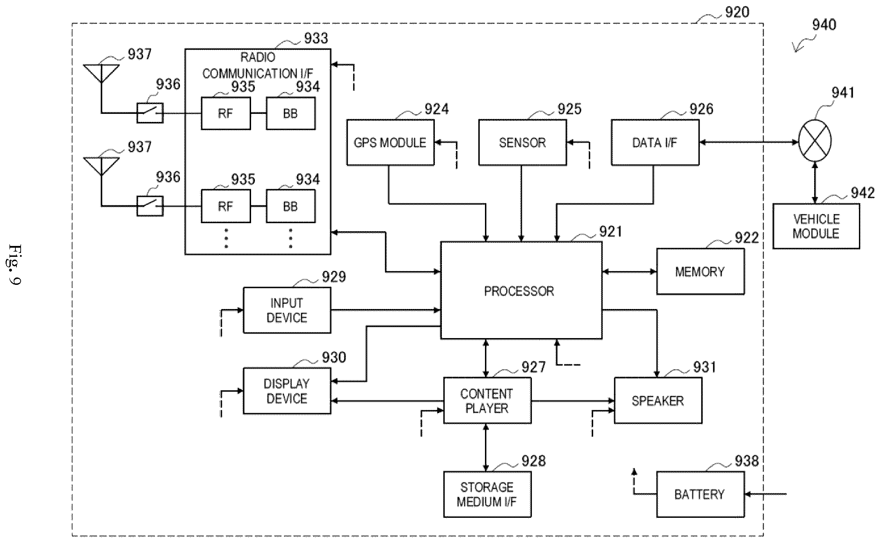

FIG. 9 is a block diagram showing an example of a schematic configuration of automobile navigation equipment 920 to which the technology of the present disclosure can be applied. The automobile navigation equipment 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or a SoC, and controls the navigation function of the automobile navigation equipment 920 and additional functions. The memory 922 includes an RAM and an ROM, and stores data and programs executed by the processor 921.

The GPS module 924 uses a GPS signal received from a GPS satellite to measure a position of the automobile navigation equipment 920 (such as latitude, longitude, and altitude). The sensor 925 may include a group of sensors, such as a gyro sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 reproduces content stored in a storage medium (such as a CD and a DVD), which is inserted into the storage medium interface 928. The input device 929 includes, for example, a touch sensor, a button, or a switch configured to detect a touch on a screen of the display device 930, and receives an operation or information input from the user. The display device 930 includes a screen such as an LCD or OLED display, and displays an image of a navigation function or reproduced content. The speaker 931 outputs the sound of the navigation function or the reproduced content.

The radio communication interface 933 supports any cellular communication scheme, such as LTE and LTE-Advanced, and executes wireless communication. The radio communication interface 933 may generally include, for example, a BB processor 934 and an RF circuit 935. The BB processor 934 may execute, for example, encoding/decoding, modulation/demodulation, and multiplexing/demultiplexing, and execute various types of signal processing for wireless communications. Meanwhile, the RF circuit 935 may include, for example, a mixer, a filter, and an amplifier, and transmit and receive wireless signals via the antenna 937. The radio communication interface 933 may also be a chip module on which the BB processor 934 and the RF circuit 935 are integrated. As shown in FIG. 9, the radio communication interface 933 may include multiple BB processors 934 and multiple RF circuits 935. Although FIG. 9 shows an example in which the radio communication interface 933 includes multiple BB processors 934 and multiple circuits 935, the radio communication interface 933 may also include a single BB processor 934 or a single RF circuit 935.

Furthermore, in addition to the cellular communication scheme, the radio communication interface 933 may support types of wireless communication schemes, such as a short-range wireless communication scheme, a near field communication scheme, and a wireless LAN scheme. In this case, the radio communication interface 933 may include a BB processor 934 and an RF circuit 935 for each wireless communication scheme.

Each of the antenna switches 936 switches a connection destination of the antenna 937 among multiple circuits included in the radio communication interface 933 (e.g., circuits for different wireless communication schemes).

Each of the antennas 937 includes a single or multiple antenna elements (such as multiple antenna elements included in a MIMO antenna), and is used for the radio communication interface 933 to transmit and receive wireless signals. As shown in FIG. 9, the automobile navigation equipment 920 may include multiple antennas 937. Although FIG. 9 shows an example in which the automobile navigation equipment 920 includes multiple antennas 937, the automobile navigation equipment 920 may also include a single antenna 937.

Furthermore, the automobile navigation equipment 920 may include an antenna 937 for each wireless communication scheme. In this case, the antenna switch 936 may be omitted from the configuration of the automobile navigation equipment 920.

The battery 938 supplies power to each block of the automobile navigation equipment 920 as shown in FIG. 9 via a feeder line, which is partially shown as a dashed line in the figure. The battery 938 accumulates electric power supplied from the vehicle.

In the automobile navigation equipment 920 as shown in FIG. 9, in a case where the electronic apparatus 300 as described with reference to FIG. 3 is, for example, implemented to serve as automobile navigation equipment on a user equipment side, the transceiver of the electronic apparatus 300 may be implemented by the radio communication interface 933. At least a part of the function may also be implemented by the processor 921. For example, the processor 921 may receive an updated timing advance by executing the function of the unit as described above with reference to FIG. 3.

The technology of the present disclosure may also be implemented as an in-vehicle system (or vehicle) 940 including one or more blocks in the automobile navigation equipment 920, the in-vehicle network 941, and the vehicle module 942. The vehicle module 942 generates vehicle data (such as vehicle speed, engine speed, and failure information), and outputs the generated data to the in-vehicle network 941.

The basic principle of the present invention has been described above in conjunction with specific embodiments. However, it should be pointed out that, for those skilled in the art, it could be understood that all or any step or component of the methods and devices of the present invention may be implemented in any computing device (including processors, storage media, etc.) or network of computing devices in the form of hardware, firmware, software, or a combination thereof. This can be achieved by those skilled in the art utilizing their basic circuit design knowledge or basic programming skills after reading the description of the present invention.

Moreover, the present invention also proposes a program product storing a machine-readable instruction code that, when read and executed by a machine, can execute the above-mentioned methods according to the embodiments of the present invention.

Accordingly, a storage medium for carrying the above-mentioned program product storing a machine-readable instruction code is also included in the disclosure of the present invention. The storage medium includes, but is not limited to, a floppy disk, an optical disk, a magneto-optical disk, a memory card, a memory stick, etc.

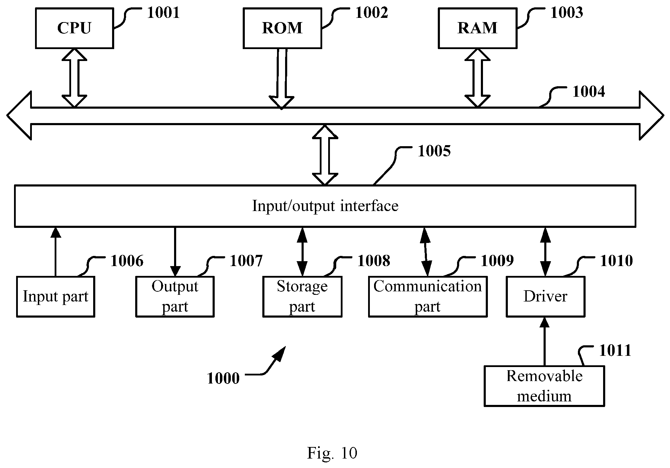

In a case where the present invention is implemented by software or firmware, a program constituting the software is installed from a storage medium or a network to a computer with a dedicated hardware structure (e.g., a general-purpose computer 1000 as shown in FIG. 10), and the computer, when installed with various programs, can execute various functions and the like.

In FIG. 10, a central processing unit (CPU) 1001 executes various processing in accordance with a program stored in a read only memory (ROM) 1002 or a program loaded from a storage part 1008 to a random access memory (RAM) 1003. In the RAM 1003, data required when the CPU 1001 executes various processing and the like is also stored as needed. The CPU 1001, the ROM 1002, and the RAM 1003 are connected to each other via a bus 1004. The input/output interface 1005 is also connected to the bus 1004.

The following components are connected to the input/output interface 1005: an input part 1006 (including a keyboard, a mouse, etc.), an output part 1007 (including a display, such as a cathode ray tube (CRT), a liquid crystal display (LCD), etc., and a speaker, etc.), a storage part 1008 (including a hard disk, etc.), and a communication part 1009 (including a network interface card such as an LAN card, a modem, etc.). The communication part 1009 executes communication processing via a network such as the Internet. A driver 1010 may also be connected to the input/output interface 1005, as needed. A removable medium 1011 such as a magnetic disk, an optical disk, a magneto-optical disk, a semiconductor memory and the like is installed on the driver 1010 as needed, so that a computer program read out therefrom is installed into the storage part 1008 as needed.

In a case where the above-mentioned series of processing is implemented by software, a program constituting the software is installed from a network such as the Internet or a storage medium such as the removable medium 1011.

Those skilled in the art should understand that, this storage medium is not limited to the removable medium 1011 as shown in FIG. 10 which has a program stored therein and which is distributed separately from an apparatus to provide the program to users. Examples of the removable media 1011 include magnetic disks (including a floppy disk (registered trademark)), an optical disk (including a compact disk read-only memory (CD-ROM) and a digital versatile disk (DVD)), a magneto-optical disk (including a mini disk (MD) (registered trademark)), and a semiconductor memory. Alternatively, the storage medium may be the ROM 1002, a hard disk included in the storage part 1008, etc., which have programs stored therein and which are distributed concurrently with the apparatus including them to users.

It should also be pointed out that in the devices, methods and systems of the present invention, each component or each step may be decomposed and/or recombined. These decompositions and/or recombinations should be regarded as equivalent solutions of the present invention. Moreover, the steps of executing the above-mentioned series of processing may naturally be executed in chronological order in the order as described, but do not necessarily need to be executed in chronological order. Some steps may be executed in parallel or independently of each other.

Finally, it should be noted that, the terms "include", "comprise" or any other variants thereof are intended to cover non-exclusive inclusion, so that a process, method, article or apparatus that includes a series of elements not only includes those elements, but also includes other elements that are not explicitly listed, or but also includes elements inherent to such a process, method, article, or apparatus. Furthermore, in the absence of more restrictions, an element defined by sentence "including one..." does not exclude the existence of other identical elements in a process, method, article, or apparatus that includes the element.

Although the embodiments of the present invention have been described above in detail in conjunction with the accompanying drawings, it should be appreciated that, the described embodiments are only used to illustrate the present invention and do not constitute a limitation to the present invention. For those skilled in the art, various modifications and changes may be made to the above-mentioned embodiments without departing from the essence and scope of the present invention. Therefore, the scope of the present invention is defined only by the appended claims.

## Claims

1. An electronic apparatus (800) for wireless communications, comprising processing circuitry (821) configured to:
in a process during which first information about a first timing advance of user equipment within a service range of a device related to the electronic apparatus is to be retransmitted to the user equipment using a Hybrid Automatic Repeat Request, HARQ, mechanism, transmit second information about a second timing advance to the user equipment in a case where the first timing advance is updated, wherein the second timing advance is an updated first timing advance;
wherein
the first information is a value of the first timing advance, and the second information is a value of the second timing advance;
the processing circuitry is configured to transmit the second information and not transmit the first information in a first HARQ process for retransmission in a case where information to be transmitted in the first HARQ process for retransmission is the first information; and
the processing circuitry is configured to send downlink control information, DCI, scrambled by Scrambled Transmission-Radio Network Temporary Identifier, INT-RNTI, to the user equipment, so as to inform the user equipment that a time-frequency resource where a Medium Access Control Control Element, MAC CE, carrying the first information and transmitted in a first HARQ process for initial transmission lies is invalid, to inform the user equipment of not soft combing the first information and the second information after receiving the second information.

2. The electronic apparatus according to claim 1, wherein
the processing circuitry is configured to call, in a case where information to be transmitted in a first HARQ process for retransmission is the first information, a second HARQ process different from the first HARQ process to transmit the second information.

3. The electronic apparatus according to claim 2,
wherein the first information is a difference value between the first timing advance and an initial timing advance at the time of initial access of the user equipment to the device, and the second information is a difference value between the second timing advance and the initial timing advance, or
wherein
the second information is a difference value between the second timing advance and a timing advance correctly received and used by the user equipment, and
the processing circuitry is configured to inform, through Downlink Control Information, DCI, signaling, the user equipment of: ignoring information about a timing advance received in the first HARQ process, and obtaining the second timing advance based on the received second information and the timing advance correctly received and used by the user equipment, or
wherein
the second information is a difference value between the second timing advance and a timing advance correctly received and used by the user equipment, and
the processing circuitry is configured to send Downlink Control Information, DCI, scrambled by Scrambled Transmission-Radio Network Temporary Identifier, INT-RNTI, to the user equipment, so as to inform the user equipment that a time-frequency resource where a Medium Access Control Control Element, MAC CE, carrying the first information and transmitted in the first HARQ process lies is invalid, to inform the user equipment of obtaining the second timing advance based on the second information and the timing advance correctly received and used by the user equipment.

4. The electronic apparatus according to claim 1, wherein the processing circuitry is configured to:
transmit the second information based on a Code Block Group, CBG, and
in Downlink Control Information, DCI, for indicating the retransmission, set Code Bock Group Flushing-out Information, CBGFI, to a value indicating that none of CBGs transmitted in a first HARQ process for retransmission is soft combined with corresponding CBG transmitted in a first HARQ process for initial transmission.

5. The electronic apparatus according to claim 1, wherein the processing circuitry is configured to:
transmit the second information based on a Code Block Group, CBG, and
extend the number of bits of Code Bock Group Flushing-out Information, CBGFI, in Downlink Control Information, DCI, for indicating the retransmission to be the same as the number of bits of Code Bock Group Transmission Information, CBGTI, and
set bits in the CBGFI, which correspond to bits in the CBGTI indicating a CBG including the second information, to a value indicating that a CBG including the second information transmitted in a first HARQ process for retransmission is not soft combined with a corresponding CBG transmitted in a first HARQ process for initial transmission.

6. The electronic apparatus according to claim 5, wherein the processing circuitry is further configured:
set bits of the CBGFI, among bits corresponding to CBGs transmitted in a first HARQ process for retransmission, other than the bits corresponding to the CBG including the second information, to a value indicating that CBGs transmitted in the first HARQ process for retransmission are soft combined with corresponding CBGs transmitted in the first HARQ process for initial transmission.

7. An electronic apparatus (900) for wireless communications, comprising processing circuitry (901) configured to:
in a process during which first information about a first timing advance of the electronic apparatus is to be re-received from a network side apparatus serving the electronic apparatus using a Hybrid Automatic Repeat Request, HARQ, mechanism, receive second information about a second timing advance from the network side apparatus in a case where the first timing advance is updated, wherein the second timing advance is an updated first timing advance;
wherein
the first information is a value of the first timing advance, and the second information is a value of the second timing advance;
the processing circuitry is configured to receive the second information, not the first information, via a first HARQ process for retransmission; and
the processing circuitry is configured to be informed, via downlink control information, DCI, scrambled by Scrambled Transmission-Radio Network Temporary Identifier, INT-RNTI, that a time-frequency resource where a Medium Access Control Control Element, MAC CE, carrying the first information and transmitted by the network side apparatus in a first HARQ process for initial transmission lies is invalid, so that the electronic apparatus does not soft combine the first information and the second information after receiving the second information.

8. The electronic apparatus according to claim 7, wherein
the processing circuitry is configured to receive, in a case where information received via a first HARQ process for retransmission is the first information, the second information via a second HARQ process different from the first HARQ process.

9. The electronic apparatus according to claim 8,
wherein the first information is a difference value between the first timing advance and an initial timing advance at the time of initial access of the electronic apparatus to the network side apparatus, and the second information is a difference value between the second timing advance and the initial timing advance, or
wherein
the second information is a difference value between the second timing advance and a timing advance correctly received and used by the electronic apparatus, and
the processing circuitry is configured to be informed, through Downlink Control Information, DCI, signaling, of: ignoring information about a timing advance received in the first HARQ process, and obtaining the second timing advance based on the received second information and the timing advance correctly received and used by the electronic apparatus, or
wherein
the second information is a difference value between the second timing advance and a timing advance correctly received and used by the electronic apparatus, and
the processing circuitry is configured to be informed, via Downlink Control Information, DCI, scrambled by Scrambled Transmission-Radio Network Temporary Identifier, INT-RNTI, that: a time-frequency resource where a Medium Access Control Control Element, MAC CE, carrying the first information and transmitted by the network side apparatus in the first HARQ process lies is invalid, so that the electronic apparatus obtains the second timing advance based on the second information and the timing advance correctly received and used by the electronic apparatus.

10. The electronic apparatus according to claim 7, wherein the processing circuitry is further configured to soft combine information, among information received via a first HARQ process for retransmission, other than the second information, with corresponding information received via a first HARQ process for initial transmission.

11. The electronic apparatus according to claim 7, wherein the processing circuitry is configured to:
receive the second information based on a Code Block Group, CBG, and
receive Downlink Control Information, DCI, for indicating the retransmission from the network side apparatus, wherein in the DCI, Code Block Group Flushing-out Information CBGFI is set to a value indicating that none of CBGs transmitted in a first HARQ process for retransmission is soft combined with a corresponding CBG transmitted in a first HARQ procedure for initial transmission, or
wherein the processing circuitry is configured to:
receive the second information based on a Code Block Group, CBG, and
receive Downlink Control Information, DCI, for indicating the retransmission from the network side apparatus, wherein in the DCI, the number of bits of Code Bock Group Flushing-out Information, CBGFI, in the Downlink Control Information, DCI, for indicating the retransmission is extended to be the same as the number of bits of Code Bock Group Transmission Information, CBGTI, and bits in the CBGFI, which correspond to bits in the CBGTI indicating a CBG including the second information, are set to a value indicating that a CBG including the second information transmitted in a first HARQ process for retransmission is not soft combined with a corresponding CBG transmitted in a first HARQ process for initial transmission.

## Patentansprüche

1. Elektronische Einrichtung (800) für drahtlose Kommunikation, umfassend Verarbeitungsschaltung (821), die konfiguriert ist zum:
Übertragen, in einem Prozess, während dessen erste Informationen über einen ersten Timing-Advance einer Benutzerausrüstung innerhalb eines Dienstbereichs einer mit der elektronischen Einrichtung in Beziehung stehenden Vorrichtung unter Verwendung eines Hybrid-Automatic-Repeat-Request-, HARQ-, Mechanismus erneut an die Benutzerausrüstung zu übertragen sind, von zweiten Informationen über einen zweiten Timing-Advance an die Benutzerausrüstung in einem Fall, in dem der erste Timing-Advance aktualisiert wird, wobei der zweite Timing-Advance ein aktualisierter erster Timing-Advance ist;
wobei
die ersten Informationen ein Wert des ersten Timing-Advance sind, und die zweiten Informationen ein Wert des zweiten Timing-Advance sind;
die Verarbeitungsschaltung konfiguriert ist, um die zweiten Informationen zu übertragen und die ersten Informationen in einem ersten HARQ-Prozess für eine Neuübertragung nicht zu übertragen, in einem Fall, in dem die Informationen, die in dem ersten HARQ-Prozess für eine Neuübertragung zu übertragenden sind, die ersten Informationen sind; und
die Verarbeitungsschaltung konfiguriert ist, um Downlink-Steuerinformationen, DCI, die durch einen Scrambled Transmission-Radio Network Temporary Identifier, INT-RNTI, verschlüsselt sind, an die Benutzerausrüstung zu senden, um die Benutzerausrüstung darüber zu informieren, dass eine Zeit-Frequenz-Ressource, in der ein Medium Access Control Control Element, MAC CE, liegt, das die ersten Informationen trägt und in einem ersten HARQ-Prozess für eine Erstübertragung übertragen wird, ungültig ist, um die Benutzerausrüstung darüber zu informieren, die ersten Informationen und die zweiten Informationen nach dem Empfangen der zweiten Informationen nicht zu soft-kombinieren.

2. Elektronische Einrichtung nach Anspruch 1, wobei
die Verarbeitungsschaltung konfiguriert ist, um in einem Fall, in dem in einem ersten HARQ-Prozess zur Neuübertragung zu übertragenden Informationen die ersten Informationen sind, einen zweiten HARQ-Prozess, der sich von dem ersten HARQ-Prozess unterscheidet, aufzurufen, um die zweiten Informationen zu übertragen.

3. Elektronische Einrichtung nach Anspruch 2,
wobei die erste Information ein Differenzwert zwischen dem ersten Timing-Advance und einem anfänglichen Timing-Advance zum Zeitpunkt des anfänglichen Zugriffs der Benutzerausrüstung auf die Vorrichtung ist, und die zweite Information ein Differenzwert zwischen dem zweiten Timing-Advance und dem anfänglichen Timing-Advance ist, oder
wobei
die zweite Information ein Differenzwert zwischen dem zweiten Timing-Advance und einem von der Benutzerausrüstung korrekt empfangenen und verwendeten Timing-Advance ist, und
die Verarbeitungsschaltung konfiguriert ist, um durch Downlink-Steuerinformations-, DCI-, Signalisierung die Benutzerausrüstung darüber zu informieren, Informationen über einen in dem ersten HARQ-Prozess empfangenen Timing-Advance zu ignorieren und den zweiten Timing-Advance basierend auf den empfangenen zweiten Informationen und dem durch die Benutzerausrüstung korrekt empfangenen und verwendeten Timing-Advance zu erhalten, oder
wobei
die zweite Information ein Differenzwert zwischen dem zweiten Timing-Advance und einem von der Benutzerausrüstung korrekt empfangenen und verwendeten Timing-Advance ist, und
die Verarbeitungsschaltung konfiguriert ist, um Downlink-Steuerinformationen, DCI, die durch einen Scrambled Transmission-Radio Network Temporary Identifier, INT-RNTI, verschlüsselt sind, an die Benutzerausrüstung zu senden, um die Benutzerausrüstung darüber zu informieren, dass eine Zeit-Frequenz-Ressource, in der ein Medium Access Control Control Element, MAC CE, liegt, das die ersten Informationen trägt und im ersten HARQ-Prozess übertragen wird, ungültig ist, um die Benutzerausrüstung über das Erhalten des zweiten Timing-Advance basierend auf den zweiten Informationen und dem durch die Benutzerausrüstung korrekt empfangenen und verwendeten Timing-Advance zu informieren.

4. Elektronische Einrichtung nach Anspruch 1, wobei die Verarbeitungsschaltung konfiguriert ist zum:
Übertragen der zweiten Informationen basierend auf einer Code-Block-Group, CBG, und
in Downlink Control Information, DCI, zur Anzeige der Neuübertragung, Setzen der Code-Block-Group-Flushing-Out-Information, CBGFI, auf einen Wert, der anzeigt, dass keine der in einem ersten HARQ-Prozess zur Neuübertragung übertragenen CBGs mit einer entsprechenden CBG soft-kombiniert wird, die in einem ersten HARQ-Prozess zur Erstübertragung übertragen wurde.

5. Elektronische Einrichtung nach Anspruch 1, wobei die Verarbeitungsschaltung konfiguriert ist zum:
Übertragen der zweiten Informationen basierend auf einer Code-Block-Group, CBG, und
Erweitern der Anzahl der Bits der Code-Block-Group-Flushing-Out-Information, CBGFI, in den Downlink-Control-Informationen, DCI, zum Anzeigen der Neuübertragung, sodass sie gleich der Anzahl der Bits der Code-Block-Group-Transmission-Informationen, CBGTI, sind, und
Setzen von Bits in dem CBGFI, die Bits in dem CBGTI entsprechen, die eine CBG angeben, die die zweiten Informationen beinhaltet, auf einen Wert, der angibt, dass eine CBG, die die zweiten Informationen beinhaltet, die in einem ersten HARQ-Prozess zur Neuübertragung übertragen wird, nicht mit einer entsprechenden CBG soft-kombiniert wird, die in einem ersten HARQ-Prozess zur Erstübertragung übertragen wird.

6. Elektronische Einrichtung nach Anspruch 5, wobei die Verarbeitungsschaltung ferner konfiguriert ist zum:
Setzen von Bits des CBGFI, unter Bits, die CBGs entsprechen, die in einem ersten HARQ-Prozess zur Neuübertragung übertragen werden, mit Ausnahme der Bits, die dem CBG entsprechen, das die zweiten Informationen beinhaltet, auf einen Wert, der angibt, dass CBGs, die in dem ersten HARQ-Prozess zur Neuübertragung übertragen werden, mit entsprechenden CBGs, die in dem ersten HARQ-Prozess zur Erstübertragung übertragen werden, soft-kombiniert werden.

7. Elektronische Einrichtung (900) für drahtlose Kommunikation, umfassend die Verarbeitungsschaltung (901), die konfiguriert ist zum:
Empfangen, in einem Prozess, während dessen erste Informationen über einen ersten Timing-Advance der elektronischen Einrichtung von einer netzwerkseitigen Einrichtung, die die elektronische Einrichtung bedient, unter Verwendung eines Hybrid-Automatic-Repeat-Request-, HARQ-, Mechanismus erneut empfangen werden sollen, von zweiten Informationen über einen zweiten Timing-Advance von der netzwerkseitigen Einrichtung in einem Fall, in dem der erste Timing-Advance aktualisiert wird, wobei der zweite Timing-Advance ein aktualisierter erster Timing-Advance ist;
wobei
die ersten Informationen ein Wert des ersten Timing-Advance sind, und die zweiten Informationen ein Wert des zweiten Timing-Advance sind;
die Verarbeitungsschaltung konfiguriert ist, um die zweiten Informationen, nicht die ersten Informationen, über einen ersten HARQ-Prozess zur Neuübertragung zu empfangen; und
die Verarbeitungsschaltung konfiguriert ist, um über Downlink-Steuerinformationen, DCI, die durch einen Scrambled Transmission-Radio Network Temporary Identifier, INT-RNTI, verschlüsselt sind, darüber informiert zu werden, dass eine Zeit-Frequenz-Ressource, in der ein Medium Access Control Control Element, MAC CE, liegt, das die ersten Informationen trägt und durch die netzwerkseitige Einrichtung in einem ersten HARQ-Prozess zur Erstübertragung übertragen wird, ungültig ist, sodass die elektronische Einrichtung die ersten Informationen und die zweiten Informationen nach dem Empfangen der zweiten Informationen nicht soft-kombiniert.

8. Elektronische Einrichtung nach Anspruch 7, wobei
die Verarbeitungsschaltung konfiguriert ist, um in einem Fall, in dem über einen ersten HARQ-Prozess zur Neuübertragung empfangene Informationen die ersten Informationen sind, die zweiten Informationen über einen zweiten HARQ-Prozess zu empfangen, der von dem ersten HARQ-Prozess verschieden ist.

9. Elektronische Einrichtung nach Anspruch 8,
wobei die erste Information ein Differenzwert zwischen dem ersten Timing-Advance und einem anfänglichen Timing-Advance zum Zeitpunkt des anfänglichen Zugriffs der elektronischen Einrichtung auf die netzwerkseitige Einrichtung ist, und die zweite Information ein Differenzwert zwischen dem zweiten Timing-Advance und dem anfänglichen Timing-Advance ist, oder
wobei
die zweite Information ein Differenzwert zwischen dem zweiten Timing-Advance und einem von der elektronischen Einrichtung korrekt empfangenen und verwendeten Timing-Advance ist, und
die Verarbeitungsschaltung konfiguriert ist, um durch Downlink-Steuerinformations-, DCI-, Signalisierung informiert zu werden über: das Ignorieren von Informationen über einen Timing-Advance, der in dem ersten HARQ-Prozess empfangen wurde, und das Erhalten des zweiten Timing-Advance basierend auf den empfangenen zweiten Informationen und dem Timing-Advance, der von der elektronischen Einrichtung korrekt empfangen und verwendet wurde, oder
wobei
die zweite Information ein Differenzwert zwischen dem zweiten Timing-Advance und einem von der elektronischen Einrichtung korrekt empfangenen und verwendeten Timing-Advance ist, und
die Verarbeitungsschaltung konfiguriert ist, um über Downlink Control Information, DCI, die durch einen Scrambled Transmission-Radio Network Temporary Identifier, INT-RNTI, verschlüsselt sind, darüber informiert zu werden, dass: eine Zeit-Frequenz-Ressource, in der ein Medium Access Control Control Element, MAC CE, liegt, das die ersten Informationen trägt und von der netzwerkseitigen Einrichtung in dem ersten HARQ-Prozess übertragen wird, ungültig ist, sodass die elektronische Einrichtung den zweiten Timing-Advance basierend auf den zweiten Informationen und dem von der elektronischen Einrichtung korrekt empfangenen und verwendeten Timing-Advance erhält.

10. Elektronische Einrichtung nach Anspruch 7, wobei die Verarbeitungsschaltung ferner konfiguriert ist, um Informationen, unter den Informationen, die über einen ersten HARQ-Prozess zur Neuübertragung empfangen werden, außer den zweiten Informationen, mit entsprechenden über einen ersten HARQ-Prozess zur Erstübertragung empfangenen Informationen zu soft-kombinieren.

11. Elektronische Einrichtung nach Anspruch 7, wobei die Verarbeitungsschaltung ferner konfiguriert ist zum:
Empfangen der zweiten Informationen basierend auf einer Code-Block-Group, CBG, und
Empfangen von Downlink-Steuerinformationen, DCI, zum Anzeigen der Neuübertragung von der netzwerkseitigen Einrichtung, wobei in den DCI die Code-Block-Group-Flushing-Out-Informationen CBGFI auf einen Wert gesetzt sind, der anzeigt, dass keine der in einem ersten HARQ-Prozess zur Neuübertragung übertragenen CBGs mit einer entsprechenden CBG, die in einem ersten HARQ-Prozess zur Erstübertragung übertragen wurde, soft-kombiniert wird, **oder**
wobei die Verarbeitungsschaltung konfiguriert ist zum:
Empfangen der zweiten Informationen basierend auf einer Code-Block-Group, CBG, und
Empfangen von Downlink-Steuerinformationen, DCI, zum Anzeigen der Neuübertragung von der netzwerkseitigen Einrichtung, wobei in den DCI die Anzahl von Bits von Code-Block-Group-Flushing-Out-Informationen, CBGFI, in den Downlink-Steuerinformationen, DCI, zum Anzeigen der Neuübertragung erweitert ist, um gleich der Anzahl von Bits von Code-Block-Group-Transmission-Informationen, CBGTI, zu sein, und Bits in den CBGFI, die Bits in den CBGTI entsprechen, die eine CBG anzeigen, die die zweiten Informationen beinhalten, auf einen Wert gesetzt werden, der anzeigt, dass eine CBG, die die zweiten Informationen beinhalten, die in einem ersten HARQ-Prozess zur Neuübertragung übertragen werden, nicht mit einer entsprechenden CBG soft-kombiniert wird, die in einem ersten HARQ-Prozess zur Erstübertragung übertragen wird.

## Revendications

1. Appareil électronique (800) destiné à des communications sans fil comprenant une circuiterie de traitement (821) configurée pour :
dans un processus au cours duquel les premières informations concernant une première avance de synchronisation d'un équipement utilisateur dans une plage de service d'un dispositif lié à l'appareil électronique doivent être retransmises à l'équipement utilisateur à l'aide d'un mécanisme de demande de répétition automatique hybride, HARQ, transmettre des secondes informations concernant une seconde avance de synchronisation à l'équipement utilisateur dans le cas où la première avance de synchronisation est mise à jour, dans lequel la seconde avance de synchronisation est une première avance de synchronisation mise à jour ;
dans lequel
les premières informations sont une valeur de la première avance de synchronisation, et les secondes informations sont une valeur de la seconde avance de synchronisation ;
la circuiterie de traitement est configurée pour transmettre les secondes informations et ne pas transmettre les premières informations dans un premier processus HARQ pour retransmission dans un cas où les informations à transmettre dans le premier processus HARQ pour retransmission sont les premières informations ; et
la circuiterie de traitement est configurée pour envoyer des informations de commande de liaison descendante, DCI, brouillées par un identificateur temporaire de réseau radio de transmission brouillé, INT-RNTI, à l'équipement utilisateur, de manière à informer l'équipement utilisateur qu'une ressource temps-fréquence où se trouve un élément de commande de commande d'accès au support, MAC CE, transportant les premières informations et transmis dans un premier processus HARQ de transmission initiale de mensonges est invalide, afin d'informer l'équipement utilisateur de ne pas passer au peigne fin les premières informations et les secondes informations après réception des secondes informations.

2. Appareil électronique selon la revendication 1, dans lequel
la circuiterie de traitement est configurée pour appeler, dans le cas où des informations à transmettre dans un premier processus HARQ pour retransmission sont les premières informations, un second processus HARQ différent du premier processus HARQ pour transmettre les secondes informations.

3. Appareil électronique selon la revendication 2,
dans lequel les premières informations sont une valeur de différence entre la première avance de synchronisation et une avance de synchronisation initiale au moment de l'accès initial de l'équipement utilisateur au dispositif, et les secondes informations sont une valeur de différence entre la seconde avance de synchronisation et l'avance de synchronisation initiale, ou
dans lequel
les secondes informations sont une valeur de différence entre la seconde avance de synchronisation et une avance de synchronisation correctement reçue et utilisée par l'équipement utilisateur, et
la circuiterie de traitement est configurée pour informer, par le biais d'une signalisation d'informations de commande de liaison descendante, DCI, l'équipement utilisateur du fait qu'il ignore des informations concernant une avance de synchronisation reçue dans le premier processus HARQ, et qu'il obtient la seconde avance de synchronisation sur la base des secondes informations reçues et de l'avance de synchronisation correctement reçue et utilisée par l'équipement utilisateur, ou
dans lequel
les secondes informations sont une valeur de différence entre la seconde avance de synchronisation et une avance de synchronisation correctement reçue et utilisée par l'équipement utilisateur, et
la circuiterie de traitement est configurée pour envoyer à l'équipement utilisateur des informations de commande de liaison descendante, DCI, brouillées par un identificateur temporaire de réseau radio à transmission brouillée, INT-RNTI, de manière à informer l'équipement utilisateur qu'une ressource temps-fréquence où se trouve un élément de commande de commande d'accès au support, MAC CE, transportant les premières informations et transmis dans le premier HARQ est invalide, pour informer l'équipement utilisateur de l'obtention de la seconde avance de synchronisation sur la base des secondes informations et de l'avance de synchronisation correctement reçue et utilisée par l'équipement utilisateur.

4. Appareil électronique selon la revendication 1, dans lequel la circuiterie de traitement est configuré pour :
transmettre les secondes informations sur la base d'un groupe de blocs de code, CBG, et
dans des informations de commande de liaison descendante, DCI, pour indiquer la retransmission, régler des informations d'élimination de groupe de blocs de code, CBGFI, sur une valeur indiquant qu'aucun des CBG transmis dans un premier processus HARQ pour retransmission n'est passée au peigne fin avec le CBG correspondant transmis dans un premier processus HARQ pour transmission initiale.

5. Appareil électronique selon la revendication 1, dans lequel la circuiterie de traitement est configurée pour :
transmettre les secondes informations sur la base d'un groupe de blocs de code, CBG, et
étendre le nombre de bits d'informations d'élimination d'un groupe de blocs de code, CBGFI, dans des informations de commande de liaison descendante, DCI, pour indiquer que la retransmission est identique au nombre de bits d'informations de transmission d'un groupe de blocs de code, CBGTI, et
définir des bits dans les CBGFI, qui correspondent à des bits dans les CBGTI indiquant un CBG comportant les secondes informations, sur une valeur indiquant qu'un CBG comportant les secondes informations transmises dans un premier processus HARQ pour retransmission n'est pas combiné de manière logicielle avec un CBG correspondant transmis dans un premier processus HARQ pour une transmission initiale.

6. Appareil électronique selon la revendication 5, dans lequel la circuiterie de traitement est configurée en outre pour :
définir des bits des CBGFI, parmi des bits correspondant à des CBG transmis dans un premier processus HARQ pour retransmission, autres que les bits correspondant au CBG comportant les secondes informations, sur une valeur indiquant que des CBG transmis dans le premier processus HARQ pour retransmission sont combinés de manière logicielle avec des CBG correspondants transmis dans le premier processus HARQ pour une transmission initiale.

7. Appareil électronique (900) destiné à des communications sans fil comprenant une circuiterie de traitement (901) configurée pour :
dans un processus au cours duquel les premières informations concernant une première avance de synchronisation de l'appareil électronique doivent être reçues à nouveau d'un appareil côté réseau desservant l'appareil électronique à l'aide d'un mécanisme de demande de répétition automatique hybride, HARQ, recevoir des secondes informations relatives à une seconde avance de synchronisation de l'appareil côté réseau dans le cas où la première avance de synchronisation est mise à jour, dans lequel la seconde avance de synchronisation est une première avance de synchronisation mise à jour ;
dans lequel
les premières informations sont une valeur de la première avance de synchronisation, et les secondes informations sont une valeur de la seconde avance de synchronisation ;
la circuiterie de traitement est configurée pour recevoir les secondes informations, et non les premières informations, par l'intermédiaire d'un premier processus HARQ pour retransmission ; et
la circuiterie de traitement sont configurés pour être informés, par l'intermédiaire d'informations de commande de liaison descendante, DCI, brouillées par un identifiant temporaire de réseau radio de transmission brouillé, INT-RNTI, qu'une ressource temps-fréquence où se trouve un élément de commande de commande d'accès au support, MAC CE, transportant les premières informations et transmis par l'appareil côté réseau dans un premier HARQ le processus de mensonges de transmission initiale n'est pas valide, de sorte que l'appareil électronique ne combine pas de manière logicielle les premières informations et les secondes informations après réception des secondes informations.

8. Appareil électronique selon la revendication 7, dans lequel
la circuiterie de traitement est configurée pour recevoir, dans un cas où des informations reçues par l'intermédiaire d'un premier processus HARQ pour retransmission sont les premières informations, les secondes informations par l'intermédiaire d'un second processus HARQ différent du premier processus HARQ.

9. Appareil électronique selon la revendication 8,
dans lequel les premières informations sont une valeur de différence entre la première avance de synchronisation et une avance de synchronisation initiale au moment de l'accès initial de l'appareil électronique à l'appareil côté réseau, et les secondes informations sont une valeur de différence entre la seconde avance de synchronisation et l'avance de synchronisation initiale, ou
dans lequel
les secondes informations sont une valeur de différence entre la seconde avance de synchronisation et une avance de synchronisation correctement reçue et utilisée par l'appareil électronique, et
la circuiterie de traitement sont configurés pour être informés, par le biais d'une signalisation d'informations de commande de liaison descendante, DCI, que : le fait d'ignorer des informations concernant une avance de synchronisation reçues dans le premier processus HARQ, et l'obtention de la seconde avance de synchronisation sur la base des secondes informations reçues et de l'avance de synchronisation correctement reçue et utilisée par l'appareil électronique, ou
dans lequel
les secondes informations sont une valeur de différence entre la seconde avance de synchronisation et une avance de synchronisation correctement reçue et utilisée par l'appareil électronique, et
la circuiterie de traitement sont configurés pour être informés, par l'intermédiaire d'informations de commande de liaison descendante, DCI, brouillées par l'identifiant temporaire de réseau radio de transmission brouillé, INT-RNTI, que : une ressource temps-fréquence où se trouve un élément de commande de commande d'accès au support, MAC CE, transportant les premières informations et transmises par l'appareil côté réseau dans le premier processus HARQ est invalide, de sorte que l'appareil électronique obtient la seconde avance de synchronisation sur la base des secondes informations et de l'avance de synchronisation correctement reçue et utilisée par l'appareil électronique.

10. Appareil électronique selon la revendication 7, dans lequel la circuiterie de traitement est en outre configurée pour combiner de manière logicielle des informations, parmi des informations reçues par l'intermédiaire d'un premier processus HARQ pour retransmission, autres que les secondes informations, avec des informations correspondantes reçues par l'intermédiaire d'un premier processus HARQ pour une transmission initiale.

11. Appareil électronique selon la revendication 7, dans lequel la circuiterie de traitement est configurée en outre pour :
recevoir les secondes informations sur la base d'un groupe de blocs de code, CBG, et
recevoir des informations de commande de liaison descendante, DCI, pour indiquer la retransmission à partir de l'appareil côté réseau, dans lequel dans les DCI, les informations d'élimination de groupe de blocs de codes CBGFI sont réglées sur une valeur indiquant qu'aucun des CBG transmis dans un premier processus HARQ pour retransmission n'est combiné de manière logicielle avec un CBG correspondant transmis dans une première procédure HARQ pour transmission initiale, **ou**
dans lequel la circuiterie de traitement est configurée pour :
recevoir les secondes informations sur la base d'un groupe de blocs de code, CBG, et
recevoir des informations de commande de liaison descendante, DCI, pour indiquer la retransmission à partir de l'appareil côté réseau, dans lequel dans les DCI, le nombre de bits d'informations d'élimination de groupe de blocs de codes, CBGFI, dans les informations de commande de liaison descendante, DCI, pour indiquer la retransmission est étendu pour être le même que le nombre de bits d'informations de transmission de groupe de blocs de codes, CBGTI, et des bits dans les CBGFI, qui correspondent à des bits dans les CBGTI indiquant un CBG comportant les secondes informations, sont réglés sur une valeur indiquant qu'un CBG comportant les secondes informations transmises dans un premier processus HARQ pour retransmission n'est pas une combinaison logicielle avec un CBG correspondant transmis dans un premier processus HARQ pour une transmission initiale.
